# EUROPÄISCHE PATENTSCHRIFT

(11) **EP 2 091 718 B1**
(45) Veröffentlichungstag und Bekanntmachung des Hinweises auf die Patenterteilung: **03.08.2016**
(21) Anmeldenummer: 07856015.8
(22) Anmeldetag: 22.11.2007
(51) Int. Cl.: B29C 67/00

(54) **VORRICHTUNG UND VERFAHREN ZUR FÖRDERUNG VON ÜBERSCHÜSSIGEM PARTIKELMATERIAL BEIM AUFBAU VON MODELLEN**
DEVICE AND METHOD FOR TRANSPORTING EXCESS PARTICULATE MATERIAL ON THE CONSTRUCTION OF MODELS
DISPOSITIF ET PROCÉDÉ DE TRANSPORT DE MATIÈRE PARTICULAIRE EN EXCÈS UTILISÉ LORS DE LA CONSTRUCTION DE MODÈLES

(30) Priorität: 23.11.2006 DE 102006055326
(43) Veröffentlichungstag der Anmeldung: 26.08.2009
(73) Patentinhaber: voxeljet AG, 86316 Friedberg (DE)
(72) Erfinder: KAVEH, Kashani, Verstorben (DE)
(74) Vertreter: Helbig, Christian
(86) Internationale Anmeldenummer: PCT/DE2007/002116
(87) Internationale Veröffentlichungsnummer: WO 2008/061520

(56) Entgegenhaltungen:
- EP-A- 1 316 408
- EP-A- 1 700 686
- WO-A-2005/025780

## Beschreibung

Die vorliegende Erfindung bezieht sich auf eine Vorrichtung und ein Verfahren zur Förderung von überschüssigem Partikelmaterial beim Aufbau von Modellen.

Verfahren zum schichtweisen Aufbau dreidimensionaler Bauteile sind schon seit längerer Zeit bekannt.

Beispielsweise wird in der europäischen Patentschrift EP 0 431 924 B1 ein Verfahren zur Herstellung dreidimensionaler Objekte aus Computerdaten beschrieben. In diesem Dokument wird ausgeführt, dass Partikelmaterial dünnschichtig auf eine Plattform aufgetragen und selektiv mittels eines Druckkopfes mit Binder bedruckt wird. Der bedruckte Bereich verklebt und verfestigt sich unter dem Einfluss des Binders. Anschließend wird die Plattform um eine Schichtdicke abgesenkt und mit einer neuen Schicht Partikelmaterial versehen, die wieder selektiv entsprechend der Form des zu bildenden Bauteiles bedruckt wird. Diese Schritte werden wiederholt, bis eine gewisse Höhe erreicht ist. Aus den bedruckten und verfestigten Bereichen entsteht so ein dreidimensionales Objekt. Dieses Objekt ist in losem Partikelmaterial eingebettet. Nach dem Bauprozess wird es entnommen und von losem Partikelmaterial befreit.

Bei einem solchen Verfahren fallen beim und nach dem Herstellungsprozess große Mengen ungenutzten Partikelmaterials an. Dieses Partikelmaterial wird gesiebt und/oder anderweitig wiederaufbereitet und dem Prozess wieder zugeführt.

Dem Fachmann ist aus der Praxis ein Verfahren bekannt, bei dem ungenutztes und/oder überschüssiges Partikelmaterial vom Bediener der Anlage mittels einer Schaufel aufgenommen und in einem Behälter gesammelt wird. Dieser Behälter wird dann in eine Siebmaschine entleert. Das gesiebte Partikelmaterial gelangt in einen weiteren Behälter, von wo es wieder der Vorrichtung zum Aufbau von Modellen zugeführt werden kann.

Bei großen Anlagen und oder großen Mengen an Partikelmaterial ist der Aufwand für eine solche so genannte manuelle Wiederaufbereitung des Pulvers sehr hoch.

Ferner kann bei der Verarbeitung und Handhabung des Partikelmaterials Material verschüttet und Staub aufgewirbelt werden. Dies ist für den Bediener unangenehm oder sogar gefährlich. Risiken ergeben sich aus der Rutschgefahr durch verschüttetes Partikelmaterial und ein Gesundheitsrisiko beim Einatmen des Partikelmaterials und gegebenenfalls eine Explosionsgefahr durch aufgewirbelten Staub.

Aus der Gebrauchmusterschrift DE 201 07 262 U1 ist eine Vorrichtung Wiederaufbereitung von Partikelmaterial beschrieben. Bei dieser Vorrichtung geschieht der Materialtransport durch 4 getrennt gesteuerte Schneckenförderer, es werden 2 Siebmaschinen verwendet und eine separate Dosier- und Mischeinrichtung. Insgesamt ist die Vorrichtung sehr aufwendig, störanfällig und teuer, sie bedarf einer komplexen Steuerung und weist einen relativ hohen Platzbedarf auf.

In EP 1 700 686 A2 ist eine weitere Vorrichtung und ein Verfahren zum Wiederaufbereiten von Partikelmaterial beschrieben. Auch hier werden vier verschiedene pneumatische Förderer und eine Vielzahl von Ventilen verwendet. Dieses komplexe System bedarf einer aufwendigen Steuerung.

Die EP 1 316 408 A1 beschreibt ein Lasersinterverfahren mit Rezyklisierung von pulvermaterial. Eine Vorrichtung und ein Verfahren nach der in der Anmeldung beschriebenen Erfindung wird werde offenbart noch nahe gelegt.

In der WO 2005/025780 A1 wird ein 3D-Druckverfahren gemäß dem Oberbegriff des Anspruchs 12 und eine Vorrichtung gemäß dem Oberbegriff des Anspruchs 1 beschrieben, in dem mittels elektromagnetischer Strahlung und hohen Temperaturen selektiv Pulver zu einem Bauteil verfestigt und aufgebaut wird. Eine Vorrichtung und ein Verfahren nach der in der Anmeldung beschriebenen Erfindung wird werde offenbart noch nahe gelegt.

Die Förderleitungen stehen durch die eingesetzte Druckförderung unter Überdruck. Bei einer Undichtigkeit wird Partikelmaterial in die Umgebung ausgeblasen.

Weiter wird ein Verfahren beschrieben, mit dem eine besonders gründliche Durchmischung des prozessierten Partikelmaterials erzielt werden kann, um dem anschießenden Prozess ein Partikelmaterial mit gleichbleibenden Eigenschaften zur Verfügung stellen zu können. Dies ist jedoch nicht immer notwendig. Prozesse wie das oben beschriebene 3D-Drucken benötigen keine so aufwendige Homogenisierung des Partikelmaterials.

Es ist daher ein Gegenstand der vorliegenden Erfindung eine einfache, zuverlässige, flexible, kompakte und kostengünstige Vorrichtung zur Förderung von überschüssigem Partikelmaterial beim Aufbau von Modellen beispielsweise mittels eines Rapid Prototyping-Verfahrens bereitzustellen, wobei zur Förderung des Partikelmaterials von einer Erfassungsstelle bis zu einem Prozesspulvervorrat ein durchgehendes pneumatisches Fördersystem vorgesehen ist.

Die der Anmeldung zugrunde liegende Aufgabe wird gelöst durch eine Vorrichtung zur Förderung von überschüssigem Partikelmaterial (5) beim Aufbau von Modellen, wobei zur Förderung des Partikelmaterials (5) von einer Erfassungsstelle (31) bis zu einem Prozesspulvervorrat (11) ein durchgehendes pneumatisches Fördersystem (35) vorgesehen ist, wobei das pneumatische Fördersystem (35) ein Saugluftstrom (36) ist und wobei mehrere, zuschaltbare Erfassungselemente vorgesehen sind, wobei die Vorrichtung einen Prozesspulvervorrat vorsieht zum Sammeln des überschüssigen Pulvers oder Abfallpulvers, das dem Druckprozess wieder zugeführt wird und eine Frischpulverzuführung vorgesehen ist, wobei eine Steuerung eine gesteuerte Menge an frischem Partikelmaterial aus einem Frischpulvervorrat (41) entnimmt und sie dem Saugluftstrom (36) zugibt und sich das frische Partikelmaterial mit dem wieder aufbereiteten Partikelmaterial beim Durchlaufen der Pulveraufbereitungsanlage mischt, so dass nach der Aufbereitung schließlich homogen durchmischtes Partikelmaterial im Prozesspulvervorrat (11) vorliegt.

Weiterhin wird die der Anmeldung zugrunde liegende Aufgabe gelöst durch ein Verfahren zur Förderung von überschüssigem Partikelmaterial (5) beim Aufbau von Modellen, wobei das Partikelmaterial(5) von einer Erfassungsstelle (31) bis zu einem Prozesspulvervorrat (11) durchgehend pneumatisch gefördert wird und wobei das pneumatische Fördersystem (35) ein Saugluftstrom (36) ist und wobei mehrere, zuschaltbare Erfassungselemente vorgesehen sind, und wobei das Verfahren einen Prozesspulvervorrat vorsieht zum Sammeln des überschüssigen Pulvers oder Abfallpulvers, das dem Druckprozess wieder zugeführt wird und eine Frischpulverzuführung vorgenommen wird, wobei eine gesteuerte Menge an frischem Partikelmaterial aus einem Frischpulvervorrat (41) entnommen wird und sie dem Saugluftstrom (36) zugegeben wird und das frische Partikelmaterial mit dem wieder aufbereiteten Partikelmaterial beim Durchlaufen der Pulveraufbereitungsanlage gemischt wird, so dass nach der Aufbereitung schließlich homogen durchmischtes Partikelmaterial im Prozesspulvervorrat (11) vorliegt.

Mit einer solchen erfindungsgemäßen Vorrichtung ist es möglich, das Partikelmaterial schnell und ohne hohen Arbeitsaufwand aufzunehmen, wieder aufzubereiten und dem Prozess zurückzuführen.

Durch den Saugluftstrom des pneumatischen Fördersystems kann das Partikelmaterial auch effizient aufgenommen werden. Gegebenenfalls an der Absaugstelle aufgewirbeltes Partikelmaterial wird mit eingesaugt. Auf diese Weise wird die Staubbelastung und damit die damit verbundenen Gefahren erheblich gemindert.

Da das Partikelmaterial in einem durchgehenden, das heißt einem zusammenhängenden, oder in gewisser Weise geschlossenen System verarbeitet wird, entsteht keine Umweltbelastung und Gefahr durch austretenden Pulverstaub.

Unter geschlossen ist gemäß der vorliegenden Erfindung zu verstehen, dass von der Erfassungsstelle bis zu einem Prozesspulvervorrat, wie beispielsweise ein Silo kein Partikelmaterial austreten kann.

Unter überschüssigem Partikelmaterial ist vorzugsweise das Partikelmaterial zu verstehen, das zwar in einem Bauprozess verwendet wird, jedoch nicht für das endgültige Bauteil benötigt wird.

Überschüssiges Pulver oder auch Abfallpulver tritt bei einem Rapid-Prototyping-Prozess insbesondere an folgenden Stellen auf:
- Bei jedem Beschichtungsvorgang fällt verfahrensbedingt ein gewisser Teil des Partikelmaterials als unverbrauchtes Abfallpulver an. Der Beschichter überfährt das Baufeld und schiebt dabei eine Pulverwalze vor sich her. Er trägt eine gewisse Schichtdicke neues Partikelmaterial auf das Baufeld auf und glättet die Schicht mit Hilfe einer Klinge. Nach der Überfahrt bleibt ein Rest des Partikelmaterials vor der Beschichterklinge übrig und fällt bei Anlagen nach Stand der Technik in einen Abfallbehälter.
- Nach der Beendigung des Bauprozesses liegen die Bauteile, von losem Partikelmaterial umgeben, in dem Baucontainer vor. Zum Entpacken der Teile wird das umliegende Partikelmaterial abgesaugt oder anderweitig entfernt und die Bauteile entnommen.
- Die vereinzelten Bauteile sind von einer Lage lose anhaftendem Partikelmaterial umgeben und werden schließlich mittels Luftstahl, Pinsel oder anderen Mitteln gereinigt. Das anfallende Pulver wird gesammelt.

Eine Erfassungsstelle für das überschüssige Partikelmaterial kann daher an allen möglichen Orten sein. Beispielsweise käme dafür die Druckvorrichtung, der Baucontainer, die Entpackstation, die Reinigungsstation usw. in Frage.

Der Prozesspulvervorrat könnte als eine Sammelstelle angesehen werden oder direkt den allgemeinen Pulvervorrat für den Bauprozess darstellen, aus dem das Pulver dem Druckprozess wieder zugeführt wird.

Unter einem Fördersystem ist eine Sauganlage, es wäre jedoch im Sinne der Erfindung ebenso vorstellbar, dass das Fördersystem mehrere Sauganlagen umfasst.

Der Luftstrom des pneumatischen Fördersystems könnte beispielsweise durch einen Unterdruckgenerator erzeugt werden. Dieser kann sich entweder direkt an einem Abscheider befinden oder als separates Element ausgeführt sein. Als Unterdruckgenerator eignet sich beispielsweise ein elektrischer oder pneumatischer Sauger mit ausreichendem Fördervolumenstrom und Unterdruck.

Gemäß einer bevorzugten Ausführungsform der Erfindung ist im pneumatischen Fördersystem ein Sieb enthalten. Bei einer derartigen vorteilhaften Ausgestaltung der erfindungsgemäßen Vorrichtung könnte die Förderung des Partikelmaterials derart erfolgen, dass das Partikelmaterial eine Siebanlage passiert und dabei Verunreinigungen abgesiebt werden.

Das überschüssige Partikelmaterial kann üblicherweise wieder verwendet werden. Jedoch weist es unter Umständen Verunreinigungen, wie beispielsweise Schmutz, der von außerhalb der Anlage in das Partikelmaterial gelangt; Partikelmaterial, das durch Binderdämpfe oder Bindertropfen verklebt wurde und Agglomerate bildet; Partikelmaterial, das durch Einwirkung elektromagnetischer Strahlung versintert wurde und Agglomerate bildet; durch elektrostatische Kräfte agglomeriertes Partikelmaterial; abgebrochene Ecken von gedruckten Bauteilen auf.

Um das überschüssige Partikelmaterial von solchen gegebenenfalls enthaltenen Verunreinigungen zu Befreien wird es vorzugsweise mit einer Siebmaschine gesiebt. Dabei wird es gemäß einer bevorzugten Ausführungsform der Erfindung von der Saugluft in und durch die Siebmaschine gefördert. Grundsätzlich eignen sich verschiedene Siebmaschinen für diese Anwendung. Sie sollten jedoch vorzugsweise dicht gegenüber der Umgebung sein, damit kein Pulver aus der Siebmaschine austreten kann und der Saugluftstrom ohne Verluste durch die Siebmaschine gelangt.

Geeignete Siebmaschinen könnten beispielsweise Wurfsiebmaschinen und Wirbelstromsiebmaschinen sein.

Die Art und Größe der Siebmaschine bestimmen den Durchsatz an Partikelmaterial und den Druckverlust der Saugluft. Die Siebanlage kann von einem Fachmann gemäß den Anforderungen des Gesamtsystems so dimensioniert werden, dass ausreichend Partikelmaterial durchgesiebt werden kann und der Druckverlust durch die Siebmaschine so gering ist, dass ein ausreichender Luftvolumenstrom erreicht wird.

Die Siebmaschine weist gemäß einer bevorzugten Ausführungsform des erfindungsgemäßen Verfahrens einen Überkornausfluss auf, durch den die Verunreinigungen, die vom Sieb zurückgehalten werden, ausgeschieden werden können. An diesen Ausfluss wird ein luftdichter Behälter angeschlossen, in dem das Überkorn gesammelt wird. In regelmäßigen Abständen wird der Behälter durch den Bediener der Anlage oder automatisch geleert und das Überkorn entsorgt.

Die Maschenweite des Siebes sollte an das Partikelmaterial und die Anforderungen des Aufbauprozesses angepasst werden. Die Maschenweite entspricht üblicherweise dem Durchmesser der größten gewünschten Kornfraktion im Partikelmaterial. Sinnvolle Maschenweiten für Siebe in solchen Vorrichtungen könnten im Bereich von 70 bis 500 µm liegen.

Gegebenenfalls könnte in der erfindungsgemäßen Vorrichtung ein Abscheider vorgesehen sein. In einem solchen Abscheider könnte das Partikelmaterial nach dem Sieben vom Saugluftstrom getrennt werden und fällt in einen Zielbehälter beziehungsweise Prozesspulvervorrat.

Dieser Abscheider kann zum Beispiel in Form eines Zyklonabscheiders und/oder eines filternden Abscheiders ausgeführt sein. Ein Fachmann kann je nach Anwendung und Partikelmaterial einen geeigneten, ihm bekannten, Abscheider auswählen.

Nach einer bevorzugten Ausführungsform der Erfindung ist der Prozesspulvervorrat luftdicht ausgeführt und direkt mit einem Abscheider verbunden.

Nach einer anderen bevorzugten Ausführungsform der Erfindung könnte der Zielbehälter mittels einer Schleuse von dem Abscheider getrennt sein. Als Schleuse eignet sich beispielsweise eine Zellradschleuse zum kontinuierlichen Austrag von Partikelmaterial aus dem Abscheider in den Zielbehälter, eine Doppelpendelklappe zum kontinuierlichen Austrag von Partikelmaterial aus dem Abscheider in den Zielbehälter, oder eine durch den Unterdruck im System betätigte, einfache Pendelklappe, die beim Abschalten der pneumatischen Förderung öffnet und das Partikelmaterial ausgibt. Im letzteren beschriebenen Beispiel speichert ein Zwischenbehälter das abgeschiedene Partikelmaterial. Die Förderluft wird von Zeit zu Zeit, automatisch zeit- oder sensorgesteuert, oder manuell durch den Bediener, aber spätestens bei Erreichen des Höchstfüllstandes im Zwischenbehälter abgeschaltet und das Partikelmaterial in den Zielbehälter ausgegeben.

Der Durchsatz der Schleuse könnte zusätzlich durch einen geeigneten Sensor erfasst werden und in der Systemsteuerung weiterverarbeitet werden.

Dies könnte der Kontrolle des Pulveraufbereitungssystems oder zur Steuerung der integrierten Mischanlage dienen.

Nach einer bevorzugten Ausführungsform der Erfindung überprüft dazu ein Sensor den Füllstand des Partikelmaterials im Schleusenbehälter.

Nach einer anderen bevorzugten Ausführungsform der Erfindung überprüft dazu ein Sensor Drehungen des Rades einer Zellradschleuse.

Ferner weißt die erfindungsgemäße Vorrichtung gemäß einer besonders bevorzugten Vorrichtung ein Erfassungselement auf.

Nach einer bevorzugten Ausführungsform der Erfindung ist das Erfassungselement in dem Bereich einer Vorrichtung integriert, bei dem das überschüssige Partikelmaterial anfällt. Bei der Vorrichtung handelt es sich zum Beispiel um eine Rapid-Prototyping-Anlage und/oder eine Vorrichtung zum Entpacken oder Säubern von Bauteilen.

Zum Entfernen des Partikelmaterials aus dieser Vorrichtung muss nunmehr nur die pneumatische Förderung an den entsprechenden Anschluss angeschlossen werden.

Mit dem Erfassungselement wird durch den Saugluftstrom an der Erfassungsstelle das Partikelmaterial aufgenommen und durch die erfindungsgemäße Vorrichtung gefördert.

Hierbei könnte das Erfassungselement einen Saugstutzen und/oder eine Sauglanze aufweisen.

Sauglanzen ermöglichen das Absaugen von großen Mengen lagernden Partikelmaterials in einen Behälter.

Mit dem Erfassungselement wird durch den Saugluftstrom an der Absaugstelle das Partikelmaterial aufgenommen und durch die Aufbereitungsanlage gefördert.

Das Erfassungselement könnte gemäß einer vorteilhaften Ausgestaltung der erfindungsgemäßen Vorrichtung in einer Bearbeitungsstation und/oder einem Baucontainer zum Aufbau des Modells angeordnet sein.

Darüber hinaus könnte das Erfassungselement auch zusätzlich oder alternativ in einer Entpackstation und/oder einer Reinigungsstation angeordnet sein.

Das Abfallpulver wird an den entsprechenden Stellen erfasst und eingesaugt. Als Erfassungselemente eignen sich zum Beispiel Saugstutzen in verschiedener Form, auch kombiniert mit Bürsten, oder Sauglanzen.

Ferner könnte es vorteilhaft sein, dass das Erfassungselement zusätzlich an einem Frischpulverbehälter angeordnet ist.

Neben dem überschüssigen Partikelmaterial wird noch Frischpulver dem Prozesspulvervorrat zugeführt und dadurch gegebenenfalls nach einem zusätzlichen Mischvorgang direkt aus dem Prozesspulvervorrat wieder das Partikelmaterial für den Bauprozess bereitgestellt.

Um eine zu hohe Beladung der Saugluft mit Partikelmaterial und somit eine Überlastung des Pulveraufbereitungssystems zu vermeiden, könnten gemäß einer bevorzugten Ausführungsform der erfindungsgemäßen Vorrichtung, gegebenenfalls in der Öffnungsweite verstellbare, Falschluftöffnungen an den Erfassungselementen vorgesehen sein.

Die Vorrichtung ist derart ausgestaltet, dass mehrere, zuschaltbare Erfassungselemente vorgesehen sind. Diese Erfassungselemente könnten entweder gleichzeitig und/oder separat betrieben werden. Wird an mehreren Stellen abgesaugt, ist ein höherer Luftvolumenstrom notwendig. Ein Fachmann kann den Unterdruckgenerator nach den Anforderungen entsprechend dimensionieren.

Darüber hinaus könnte die Vorrichtung gemäß einer bevorzugten Ausführungsform weiterhin eine Wiederaufbereitungsvorrichtung für das Partikelmaterial umfassen.

Die pneumatische Fördereinrichtung befördert gemäß einer bevorzugten Ausführungsform der Erfindung zudem das Partikelmaterial durch das gesamte Wiederaufbereitungssystem. Weitere Fördereinrichtungen sind nicht erforderlich.

Ein weiterer Gegenstand der vorliegenden Erfindung ist ein Verfahren zur Förderung von überschüssigem Partikelmaterial beim Aufbau von Modellen, wobei das Partikelmaterials von einer Erfassungsstelle bis zu einem Prozesspulvervorrat durchgehend pneumatisch gefördert wird.

Gemäß einer bevorzugten Ausführung des Verfahrens erfolgt die pneumatische Förderung durch ein Sieb erfolgt.

Hierbei könnte die Erfassungsstelle ein Baucontainer, eine Aufbaustation, eine Entpackatation und/oder eine Reinigungsstation sein.

Ferner wird bei einem erfindungsgemäßen Verfahren zusätzlich Frischpulver mitgefördert.

Hierbei könnte beispielsweise nach einer gewissen Menge an wiederaufbereitetem Partikelmaterial frisches Partikelmaterial eingesaugt werden. Dies könnte beispielsweise manuell durch den Bedienergesteuert werden, in dem er statt Abfallpulver neues Partikelmaterial aus einem Vorrat saugt.

Ferner könnte es vorteilhaft sein, wenn vor der Zuführung zum Prozesspulvervorrat eine Wiederaufbereitung des Pulvers erfolgt.

Bei einigen Rapid Prototyping Verfahren, wie beispielsweise dem Lasersintern, muss verfahrensbedingt das überschüssige Pulver in einem gewissen Verhältnis mit neuem, unbenutztem Pulver vermischt werden. In einem solchen Fall ist für die Aufbereitung des Partikelmaterials zusätzlich eine genaue und automatisierte Zudosiereinrichtung für frisches Partikelmaterial notwendig.

Gemäß einer bevorzugten Ausführungsform der Erfindung wird eine Dosiereinrichtung in die Pulveraufbreitungsanlage integriert. Dabei wird nach einer gewissen Menge an wiederaufbereitetem Partikelmaterial eine genau dosierte Menge frisches Partikelmaterial eintragen. Dies könnte automatisiert ohne Eingriff des Bedieners erfolgen. Das frische bzw. neue und das wiederaufbereitete Partikelmaterial vermischen sich dann beim Durchlaufen der Pulveraufbereitungs- anlage, so dass schließlich ein homogenes Partikelmaterial erhalten wird. Die Dosiereinrichtung könnte dabei beispielsweise vor dem Abscheider im Unterdruckteil der Pulveraufbereitungsanlage und/oder hinter dem Abscheider und vor dem Zielbehälter integriert sein.

Werden sehr hohe Anforderungen an die Homogenität des Partikelmaterials gestellt, ist eine zusätzliche Mischeinrichtung notwendig um die unterschiedlichen Bestandteile des Partikelmaterials (z.B. frisches und gebrauchtes Partikelmaterial) zu einer homogenen Mischung zu verarbeiten.

Gemäß einer bevorzugten Ausführungsform der Erfindung könnte eine Mischanlage entweder vor dem Abscheider im Unterdruckteil der Pulveraufbereitungsanlage und/oder hinter dem Abscheider und/oder im Zielbehälter integriert sein.

Geeignete Mischanlagen umfassen beispielsweise statische Mischer als Einbauten in den Förderleitungen, Rührer, die sich in einem Behälter hinter dem Abscheider befinden, Mischer, die auf dem Prinzip des unterschiedlichen Haldenauf- und - abbaus in einem Behälter hinter dem Abscheider beruhen.

Dadurch, dass das Partikelmaterial mittels pneumatischer Saugförderung durch das Wiederaufbreitungssystem gefördert wird herrscht im Inneren des Systems (z.B Rohrleitungen, Siebmaschine) üblicherweise ein Unterdruck. Dieser kann das Austreten von Staub in die Umgebung durch eventuelle Undichtheiten verhindern.

Weiterhin kann es auch sinnvoll sein, unter Umständen in Abhängigkeit des verwendeten Aufbauprozesses, weitere Komponenten bzw., weitere Verfahrensschritte in der erfindungsgemäßen Vorrichtung bzw. Verfahren zu integrieren.

Diese weiteren Komponenten könnten entweder vor dem Abscheider im Förderluftstrom der erfindungsgemäßen Vorrichtung und/oder hinter dem Abscheider und vor dem Zielbehälter integriert sein.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
Figur 1 die Abfolge beim 3D-Drucken als beispielhaftes RP-Verfahren;
Figur 2 den schematischen Ablauf eines erfindungsgemäßen Verfahrens gemäß einer bevorzugten Ausführungsform;
Figur 3 eine erfindungsgemäße Vorrichtung gemäß einer bevorzugten Ausführungsform;
Figur 4 eine erfindungsgemäße Vorrichtung gemäß einer weiteren bevorzugten Ausführungsform;
Figur 5 eine erfindungsgemäße Absaugvorrichtung gemäß einer bevorzugten Ausführungsform
Figur 6 eine erfindungsgemäße Absaugvorrichtung gemäß einer weiteren bevorzugten Ausführungsform

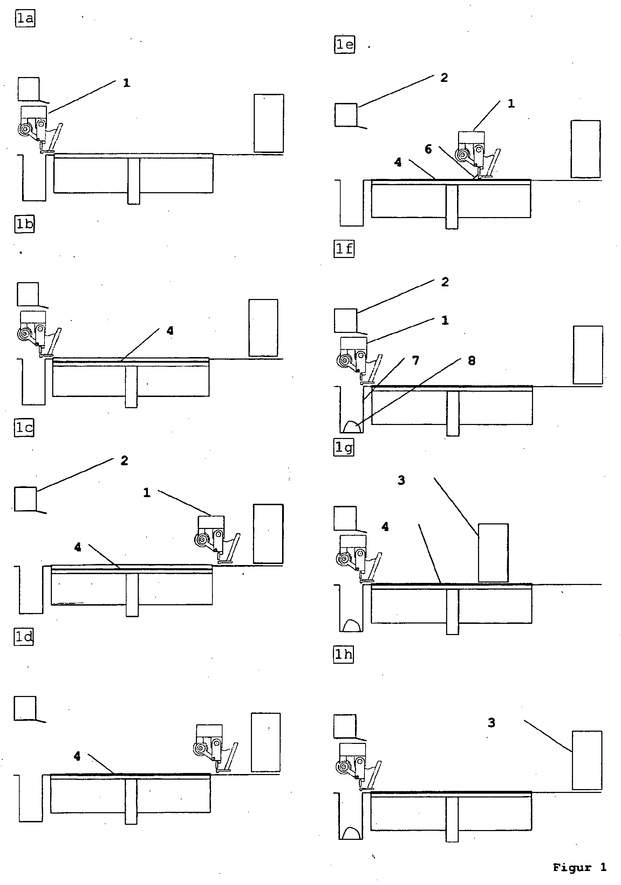

Bezug nehmend auf Figur 1 wird im Folgenden die Abfolge des 3D-Druckens als schichtweisen Aufbau von Modellen aus Partikelmaterial und Bindemittel bei einem Rapid-Prototyping-Verfahren beschrieben.

Beim Aufbau eines Bauteiles, wie beispielsweise eines Gussmodells, wird eine Bauplattform 4, auf der das Modell aufgebaut werden soll, um eine Schichtstärke des Partikelmaterials 5 abgesenkt. Danach wird das Partikelmaterial 5, beispielsweise das sehr feine und alkohollösliche Kunststoffpulver auf Basis von Polyethylmethacrylat, mit Hilfe eines Beschichters 1 in einer gewünschten Schichtstärke auf die Bauplattform 4 aufgetragen. Danach schließt sich das selektive Auftragen von Bindemittel, auf auszuhärtende Bereiche an. Dies kann beispielsweise mittels eines Drop-on-demand-Tropfenerzeugers 3, nach Art eines Tintenstrahldruckers, durchgeführt werden. Diese Auftragungsschritte werden wiederholt, bis das fertige Bauteil, eingebettet in loses Partikelmaterial 5 über seine gesamte Höhe aufgebaut ist.

Am Anfang steht der Beschichter 1 in der Ausgangslage, was in Figur 1a dargestellt ist.

Wie in Figur 1b dargestellt ist, wird im Folgenden zum Aufbau eines Modells die Bauplattform 4 um mehr als eine Schicht abgesenkt.

Danach fährt der Beschichter 1, wie in Figur 1c gezeigt, ohne Partikelmaterial auszustoßen in die Position gegenüber der Befüllvorrichtung 2, bis er über dem Rand der Bauplattform 4 steht.

Nun wird die Bauplattform 4 genau auf Schichthöhe angehoben, was aus Figur 1d ersehen werden kann. Das heißt, dass die Bauplattform 4 nun genau um eine Schichthöhe abgesenkt ist.

Anschließend fährt der Beschichter 1 in konstanter Fahrt über die Bauplattform 4. Dabei gibt er Partikelmaterial 5 in genau der richtigen Menge ab und beschichtet die Bauplattform 4. Dies ist in Figur 1e gezeigt.

Der Beschichter 1 fährt nach der Beschichtungsfahrt ohne Schwingbewegung in Eilfahrt zur Ausgangsposition zurück. Restliches Partikelmaterial 6 vor der Beschichterklinge fällt in den Abfallschacht 7. Dort sammelt sich das Abfallpulver 8 über mehrere Schichten hinweg an.

Der Beschichter kann bei Bedarf über die Befüllvorrichtung 2 neu befüllt werden. Dies ist in Figur 1f gezeigt.

Der Druckkopf 3 Überfährt nun die Bauplattform 4 und dosiert dabei den Binder selektiv an den Stellen ein, wo eine Aushärtung erzielt werden soll. Dies ist in Figur 1g dargestellt.

Nachdem der Druckkopf 3 in Ausgangslage zurück gefahren ist befinden sich alle Komponenten wieder in Anfangsposition. Dies ist in Figur 1h dargestellt, die der Figur 1a entspricht.

Der Druckprozess des Bindemittels auf das Partikelmaterials 1 kann schon während oder auch nach dem Beschichten erfolgen.

Die Schritte 1a bis 1h wiederholen sich bis das Bauteil, eingebettet in losem Partikelmaterial, über die gesamte Höhe gedruckt wurde.

Das Bauteil wird ausreichende Zeit im Pulverbett gelassen, bis es eine genügende Festigkeit besitzt.

Danach kann es herausgenommen und von anhaftenden Pulverresten gereinigt werden.

Das Bauteil kann durch geeignete Prozesse nachbehandelt werden.

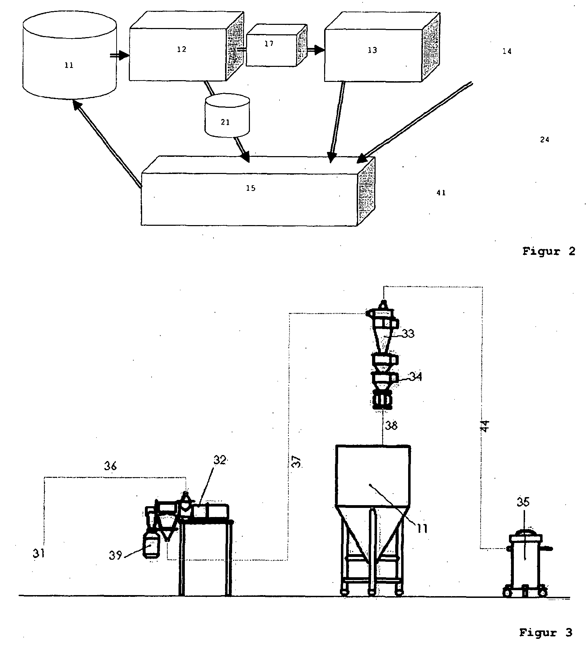

Bezug nehmend auf Figur 2 wird eine bevorzugte Ausführungsform des erfindungsgemäßen Verfahrens beschrieben.

Anfangs befindet sich das Partikelmaterial im Prozesspulvervorrat 11, von wo es in die Vorrichtung zum Aufbau von Modellen eingebracht wird.

Das anfallende Abfallpulver wird gemäß der gezeigten Ausführungsform in einem Abfallpulvercontainer 21 zwischengespeichert. Von dort gelangt es nach der Beendigung des Bauprozesses pneumatisch in die Pulveraufbereitungsanlage 15.

Die gedruckten Bauteile befinden sich nach dem Herstellungsprozess, vom losen Partikelmaterial umgeben, in einem Baucontainer 17.

Der Baucontainer 17 wird nach Fertigstellung der Bauteile in die Entpackstation 13 gesetzt. Dort wird das, im Baucontainer 17. vorliegende, ungebundene Partikelmaterial entfernt, die Bauteile werden vereinzelt und vom umliegenden Partikelmaterial befreit. Das lose Partikelmaterial gelangt wiederum pneumatisch in die Pulveraufbereitungsanlage 15.

Die vereinzelten Bauteile werden schließlich in der Reinigungsstation 14 von restlichem anhaftendem Partikelmaterial gesäubert. Das abfallende Partikelmaterial gelangt in die Pulveraufbereitungsanlage 15. Die Bauteile 24 liegen nun gereinigt vor und können je nach Bedarf weiter verarbeitet werden.

In der Pulveraufbereitungsanlage 15 wird das angefallene Partikelmaterial gesammelt, gereinigt und wieder aufbereitet. Je nach Bedarf wird frisches Partikelmaterial aus dem Frischpulvervorrat 41 zugemischt.

Das aufbereitete Partikelmaterial gelangt nun wieder in den Prozesspulvervorrat 11 und der beschriebe Kreislauf beginnt von vorne.

Bezug nehmend auf Figur 3 wird Vorrichtung gemäß einer bevorzugten Ausführungsform der Erfindung beschrieben.

Überschüssiges, unter Umständen verschmutztes Partikelmaterial wird an der Erfassungsstelle 31 aufgenommen. Zum Absaugen von großen Mengen Partikelmaterial aus einem Behälter eignet sich als Erfassungselement besonders eine Sauglanze. Zum gezielten Absaugen von Pulver aus dem Baucontainer wird vorzugsweise eine Saugdüse verwendet.

Dabei befinden sich Falschluftöffnungen in entsprechender Größe am Erfassungselement, um eine Überladung des Saugluftstroms mit Partikelmaterial 36 zu verhindern.

Das Partikelmaterial gelangt mit dem Luftstrom 36 in die Siebmaschine 32, nach Art einer Wirbelstromsiebmaschine. Verschmutzungen und verklebtes Partikelmaterial werden in den Überkornbehälter 39 befördert.

Das gereinigte Partikelmaterial wird mit dem Luftstrom 37 weiter in den Abscheider 33 gefördert. Der Abscheider 33 trennt das Partikelmaterial von dem Luftstrom 37. Das Partikelmaterial fällt in eine Zwischenkammer.

Daran schließt sich eine Schleuse 34, bestehend aus einer Pendelklappe, eine Schleusenkammer und ein Quetschventil an. Das Partikelmaterial fällt an der Pendelklappe vorbei in die Schleusenkammer. Das Quetschventil wird zeitgesteuert in regelmäßigen Abständen geöffnet und wieder geschlossen. Beim Öffnen des Quetschventils schließt die Pendelklappe durch den im Abscheider 33 herrschenden Unterdruck. Das wieder aufbereitete Pulver 38 in der Schleusenkammer entleert sich in den Prozesspulvervorrat 11. Beim Schließen des Quetschventils öffnet die Pendelklappe und Partikelmaterial strömt von der Zwischenkammer in die Schleusenkammer.

Im Prozesspulvervorrat 11 wird das aufbereitete Partikelmaterial gelagert. Der 3D-Drucker entnimmt daraus das für seinen Betrieb nötige Partikelmaterial.

Der Luftstrom ohne Partikelmaterial 44 wird im pneumatischen Fördersystem 35 erzeugt.

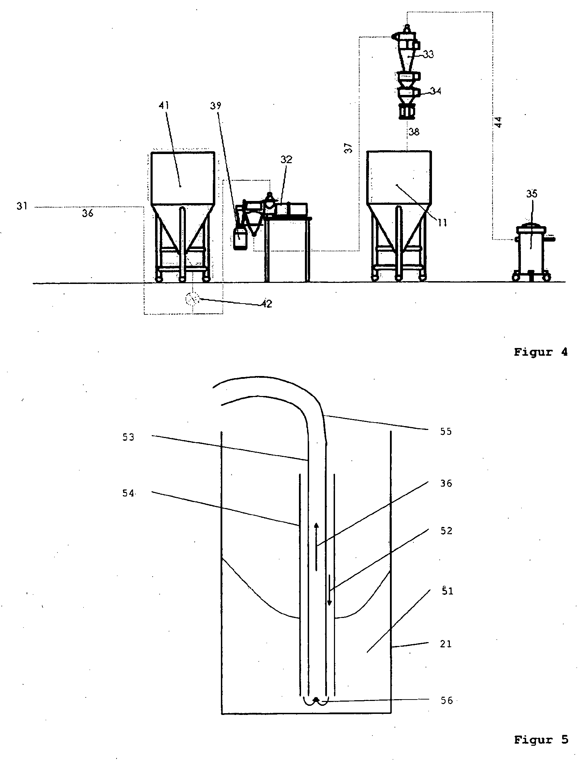

Bezug nehmend auf Figur 4 wird eine Pulveraufbereitungsanlage gemäß einer weiteren bevorzugten Ausführungsform der erfindungsgemäßen Vorrichtung dargestellt.

Das verschmutzte Partikelmaterial wird, wie bereits beschrieben, an der Erfassungsstelle 31 aufgenommen.

Das Partikelmaterial gelangt mit dem Luftstrom 36 in die Siebmaschine 32, nach Art einer Wirbelstromsiebmaschine.

Verschmutzungen und verklebtes Partikelmaterial wird in den Überkornbehälter 39 ausgegeben.

Das gereinigte Partikelmaterial wird mit dem Luftstrom 37 in den Abscheider 33 gefördert. Der Abscheider 33 trennt das Partikelmaterial von dem Luftstrom. Es fällt in eine Zwischenkammer.

Daran schließt eine Schleuse 34, bestehend aus einer Pendelklappe, eine Schleusenkammer und ein Quetschventil an. Zunächst ist das Quetschventil geschlossen. Das Partikelmaterial fällt an der Pendelklappe vorbei in die Schleusenkammer. Das Quetschventil wird geöffnet, sobald sich die Schleusenkammer zu einem bestimmten Teil gefüllt hat. Dies wird durch einen geeigneten Sensor an entsprechender Stelle in der Schleusenkammer detektiert und an die Steuerung weitergeleitet.

Durch den im Abscheider 33 herrschenden Unterdruck schließt die Pendelklappe zwischen Schleusenkammer und Zwischenkammer. Das wieder aufbereitete Pulver 38 in der Schleusenkammer entleert sich in den Prozesspulvervorrat 11.

Nachdem das gesamte Partikelmaterial ausgeflossen ist schließt das Quetschventil. Die Pendelklappe öffnet und es kann wieder Partikelmaterial in die Schleusenkammer fließen.

Bei jedem n-ten Schleusentakt, also wenn eine gewisse Menge an Partikelmaterial aufbereitet wurde, startet die Steuerung die Zellradschleuse 42 für eine gewisse Anzahl von Undrehungen. Die Anzahl der Schleusentakte n liegt vorzugsweise zwischen 1 und 10 und besonders vorzugsweise bei 1.

Die Zellradschleuse 42 entnimmt eine bestimmte, gesteuerte Menge an frischem Partikelmaterial aus dem Frischpulvervorrat 41 und gibt sie auf dem Luftstrom 36 auf.

Die Auffrischrate ist das Verhältnis von wiederaufbereitetem zu frischem Partikelmaterial. Die Menge an wiederaufbereitetem Partikelmaterial kann durch die Taktzahl n bestimmt. Die Menge an frischem Partikelmaterial wird durch die Zudosiereinrichtung für frisches Partikelmaterial 42 festgelegt. Eine vorzugsweise elektronische Steuerung steuert und überwacht den Ablauf der Pulveraufbereitungs- und Mischeinrichtung. Der Bediener gibt der Steuerung die Mengen und somit die Auffrischrate so vor, wie es vom Rapid-Prototyping-Prozess benötigt wird.

Die Auffrischungsrate liegt vorzugsweise zwischen 5 und 50 %.

Beim Durchlaufen der Pulveraufbereitungsanlage mischt sich das frische Partikelmaterial mit dem wieder aufbereiteten Partikelmaterial, so dass nach der Aufbereitung schließlich homogen durchmischtes Partikelmaterial im Prozesspulvervorrat 11 vorliegt.

Im Prozesspulvervorrat 11 wird das aufbereitete Partikelmaterial gelagert. Der 3D-Drucker entnimmt daraus das für den Betrieb benötigte Partikelmaterial.

Der Förderluftstrom wird im pneumatischen Fördersystem 35 erzeugt. Vom Abscheider 33 geht der Luftstrom ohne Partikelmaterial 44 zum Sauger 35.

Bezug nehmend auf Figur 5 wird eine Absaugvorrichtung gemäß einer bevorzugten Ausführungsform der erfindungsgemäßen Vorrichtung dargestellt. Gesammeltes Partikelmaterial wird mittels einer Sauglanze aus dem Abfallpulvercontainer 21 gesaugt.

Die Sauglanze weist zwei ineinander liegende Rohre unterschiedlichen Durchmessers auf. Am innen liegenden, dünnen Rohr 53 wird der Saugschlauch zur Pulveraufbereitungsanlage 55 angeschlossen.

Die Lanze wird, mit der anderen Seite voran, in einen mit Partikelmaterial gefüllten Behälter wie dem Abfallpulvercontainer 21 gesteckt. Saugluft 52 strömt zwischen den innen legenden Rohr 53 und außen liegenden Rohr 54 zum offenen Ende 56 des innen liegenden Rohres 53. Hier reißt es umliegendes Partikelmaterial 51 mit und befördert es mit dem Saugluftstrom 36 weiter.

Dies geschieht ohne weiteres zutun des Bediener selbstständig bis der Behälter 21 geleert ist.

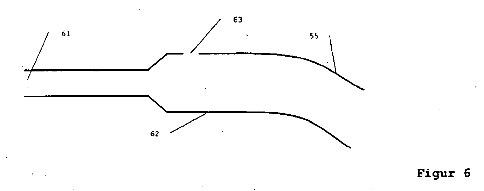

Bezug nehmend auf Figur 6 wird eine Absaugvorrichtung gemäß einer weiteren bevorzugten Ausführungsform der erfindungsgemäßen Vorrichtung dargestellt.

Partikelmaterial wird mittels eines Saugstutzens 62 aufgenommen. Das Partikelmaterial wird in der Öffnung 61 aufgenommen und durch den Saugschlauch 55 zur Pulveraufbereitungsanlage gefördert. Seitlich am Stutzen 62 befindet sich eine Falschluftöffnung 63. So wird eine zu hohe Beladung der Saugluft mit Partikelmaterial verhindert.

## Patentansprüche

1. Vorrichtung zur Förderung von überschüssigem Partikelmaterial (5) beim Aufbau von Modellen, wobei zur Förderung des Partikelmaterials (5) von einer Erfassungsstelle (31) bis zu einem Prozesspulvervorrat (11) ein durchgehendes pneumatisches Fördersystem (35) vorgesehen ist, wobei das pneumatische Fördersystem (35) ein Saugluftstrom (36) ist und wobei mehrere, zuschaltbare Erfassungselemente vorgesehen sind, wobei die Vorrichtung einen Prozesspulvervorrat vorsieht zum Sammeln des überschüssigen Pulvers oder Abfallpulvers, das dem Druckprozess wieder zugeführt wird und eine Frischpulverzuführung vorgesehen ist, **dadurch gekennzeichnet, dass** eine Steuerung eine gesteuerte Menge an frischem Partikelmaterial aus einem Frischpulvervorrat (41) entnimmt und sie dem Saugluftstrom (36) zugibt und sich das frische Partikelmaterial mit dem wieder aufbereiteten Partikelmaterial beim Durchlaufen der Pulveraufbearbeitungsanlage mischt, so dass nach der Aufbereitung schließlich homogen durchmischtes Partikelmaterial im Prozesspulvervorrat (11) vorliegt.

2. Vorrichtung nach Anspruch 1, wobei der Saugluftstrom durch einen Unterdruckgenerator erzeugt wird.

3. Vorrichtung nach Anspruch 1 oder 2, wobei im pneumatischen Fördersystem (35) ein Abscheider (33) enthalten ist.

4. Vorrichtung nach einem der vorhergehenden Ansprüche, wobei ein Erfassungselement vorgesehen ist.

5. Vorrichtung nach einem der vorhergehenden Ansprüche, wobei das Erfassungselement einen Saugstutzen (62) aufweist.

6. Vorrichtung nach einem der vorhergehenden Ansprüche, wobei das Erfassungselement eine Sauglanze aufweist.

7. Vorrichtung nach einem der vorhergehenden Ansprüche, wobei das Erfassungselement in einer Bearbeitungsstation und/oder einem Baucontainer (17) zum Aufbau des Modells angeordnet ist.

8. Vorrichtung nach einem der vorhergehenden Ansprüche, wobei das Erfassungselement in einer Entpackstation (13) und/oder einer Reinigungsstation (14) angeordnet ist.

9. Vorrichtung nach einem der vorhergehenden Ansprüche, wobei das Erfassungselement zusätzlich an einem Frischpulverbehälter (41) angeordnet ist.

10. Vorrichtung nach einem der vorhergehenden Ansprüche, wobei das Erfassungselement Falschluftöffnungen (63) aufweist.

11. Vorrichtung nach einem der vorhergehenden Ansprüche, zwischen Abscheider (33) und Prozesspulvervorrat (11) eine Wiederaufbereitungsvorrichtung für das Partikelmaterial (5) vorgesehen ist.

12. Verfahren zur Förderung von überschüssigem Partikelmaterial (5) beim Aufbau von Modellen, wobei das Partikelmaterial(5) von einer Erfassungsstelle (31) bis zu einem Prozesspulvervorrat (11) durchgehend pneumatisch gefördert wird und wobei das pneumatische Fördersystem (35) ein Saugluftstrom (36) ist und wobei mehrere, zuschaltbare Erfassungselemente vorgesehen sind, und wobei das Verfahren einen Prozesspulvervorrat vorsieht zum Sammeln des überschüssigen Pulvers oder Abfallpulvers, das dem Druckprozess wieder zugeführt wird und eine Frischpulverzuführung vorgenommen wird **dadurch gekennzeichnet, dass** eine gesteuerte Menge an frischem Partikelmaterial aus einem Frischpulvervorrat (41) entnommen wird und sie dem Saugluftstrom (36) zugegeben wird und das frische Partikelmaterial mit dem wieder aufbereiteten Partikelmaterial beim Durchlaufen der Pulveraufbereitungsanlage gemischt wird, so dass nach der Aufbereitung schließlich homogen durchmischtes Partikelmaterial im Prozesspulvervorrat (11) vorliegt.

13. Verfahren nach Anspruch 12, wobei die pneumatische Förderung durch ein Sieb erfolgt.

14. Verfahren nach einem der vorhergehenden Ansprüche 12 bis 13, wobei die Erfassungsstelle (31) ein Baucontainer (17), eine Aufbaustation, eine Entpackstation (13) und/oder eine Reinigungsstation (14) ist.

## Claims

1. A device for conveying excess particulate material (5) in the construction of models, wherein a continuous pneumatic conveying system (35) is provided to convey the particulate material (5) from a receiving point (31) to a process powder supply (11), said pneumatic conveying system (35) being a suction air stream (36), and wherein several connectable receiving elements are provided, wherein the device provides for a process powder supply to collect the excess powder or waste powder, which is fed back to the printing process, and a fresh powder feeding system is provided, **characterised in that** a control removes a controlled amount of fresh particulate material from a fresh powder supply (41) and adds it to the suction air stream (36), and the fresh particulate material mixes with the reprocessed particulate material while passing through the powder reprocessing system, so that homogeneously mixed particulate material is finally present in the process powder supply (11) after reprocessing.

2. The device according to claim 1, wherein the suction air stream is generated by a vacuum generator.

3. The device according to claim 1 or 2, wherein the pneumatic conveying system (35) includes a separator (33).

4. The device according to any one of the preceding claims, wherein a receiving element is provided.

5. The device according to any one of the preceding claims, wherein the receiving element comprises a suction nozzle (62).

6. The device according to any one of the preceding claims, wherein the receiving element comprises a suction lance.

7. The device according to any one of the preceding claims, wherein the receiving element is arranged in a processing station and/or a construction container (17) for constructing the model.

8. The device according to any one of the preceding claims, wherein the receiving element is arranged in an unpacking station (13) and/or a cleaning station (14).

9. The device according to any one of the preceding claims, wherein the receiving element is additionally arranged at a fresh powder container (41).

10. The device according to any one of the preceding claims, wherein the receiving element comprises excess air openings (63).

11. The device according to any one of the preceding claims, wherein a reprocessing device for the particulate material (5) is provided between the separator (33) and the process powder supply (11).

12. A method for conveying excess particulate material (5) in the construction of models, wherein the particulate material (5) is continuously conveyed pneumatically from a receiving point (31) to a process powder supply (11), the pneumatic conveying system (35) being a suction air stream (36), and wherein several connectable receiving elements are provided, and wherein the method provides for a process powder supply to collect the excess powder or waste powder, which is fed back to the printing process, and fresh powder is fed, **characterised in that** a controlled amount of fresh particulate material is removed from a fresh powder supply (41) and added to the suction air stream (36), and the fresh particulate material is mixed with the reprocessed particulate material while passing through the powder reprocessing system, so that homogeneously mixed particulate material is finally present in the process powder supply (11) after reprocessing.

13. The method according to claim 12, wherein the pneumatic conveying is performed through a screen.

14. The method according to any one of preceding claims 12 to 13, wherein the receiving point (31) is a construction container (17), a building station, an unpacking station (13) and/or a cleaning station (14).

## Revendications

1. Dispositif de transport de matière particulaire (5) en excès utilisé lors de la construction de modèles, dans lequel on prévoit un système de transport pneumatique continu (35) pour transporter ladite matière particulaire (5) à partir d'un point de réception (31) jusqu'à une réserve de poudre de processus (11), ledit système de transport pneumatique (35) étant un courant d'air d'aspiration (36), et dans lequel on prévoit plusieurs éléments de réception activables, ledit dispositif prévoyant une réserve de poudre à travailler pour recueillir de la poudre en excès ou de déchet, qui est rapportée au procédé d'impression, et prévoyant un système d'apport de poudre fraîche, ledit dispositif étant **caractérisé en ce qu'**une commande enlève une quantité contrôlée de matière particulaire fraîche d'une réserve de poudre fraîche (41) et introduit celle-ci dans le courant d'air d'aspiration (36), et la matière particulaire fraîche se mélange avec la matière particulaire retraitée tout en traversant le système de retraitement de poudre, de sorte qu'une mélange homogène de matière particulaire soit présente enfin dans la réserve de poudre à travailler (11) après ledit retraitement.

2. Dispositif selon la revendication 1, dans lequel le courant d'air d'aspiration est généré par un générateur à vide.

3. Dispositif selon la revendication 1 ou 2, dans lequel le système de transport pneumatique (35) présente un séparateur (33).

4. Dispositif selon l'une quelconque des revendications précédentes, dans lequel on prévoit un élément de réception.

5. Dispositif selon l'une quelconque des revendications précédentes, dans lequel ledit élément de réception comporte une tubulure d'aspiration (62).

6. Dispositif selon l'une quelconque des revendications précédentes, dans lequel ledit élément de réception comporte une lance d'aspiration.

7. Dispositif selon l'une quelconque des revendications précédentes, dans lequel ledit élément de réception est disposé dans une station de traitement et/ou un conteneur de construction (17) pour la construction du modèle.

8. Dispositif selon l'une quelconque des revendications précédentes, dans lequel ledit élément de réception est disposé dans une station de désemballage (13) et/ou une station de nettoyage (14).

9. Dispositif selon l'une quelconque des revendications précédentes, dans lequel ledit élément de réception est disposé en plus sur un conteneur de poudre fraîche (41).

10. Dispositif selon l'une quelconque des revendications précédentes, dans lequel ledit élément de réception comporte des ouvertures d'air parasite (63).

11. Dispositif selon l'une quelconque des revendications précédentes, dans lequel on prévoit un dispositif de retraitement de la matière particulaire (5) entre le séparateur (33) et la réserve de poudre à travailler (11).

12. Procédé de transport de matière particulaire (5) en excès utilisé lors de la construction de modèles, dans lequel la matière particulaire (5) est transportée de manière pneumatique en continu à partir d'un point de réception (31) jusqu'à une réserve de poudre (11) à travailler, ledit système de transport pneumatique (35) étant un courant d'air d'aspiration (36), et dans lequel on prévoit plusieurs éléments de réception activables, et ledit procédé prévoyant une réserve de poudre à travailler pour recueillir la poudre en excès ou de déchet, qui est rapportée au procédé d'impression, et de la matière particulaire fraîche est apportée, ledit procédé étant **caractérisé en ce qu'**une quantité contrôlée de matière particulaire fraîche est enlevée d'une réserve de poudre fraîche (41) et est introduite dans le courant d'air d'aspiration (36), et la matière particulaire fraîche est mélangée avec la matière particulaire retraitée en traversant le système de retraitement de poudre, de sorte qu'une mélange homogène de matière particulaire soit présente enfin dans la réserve de poudre à travailler (11) après ledit retraitement.

13. Procédé selon la revendication 12, dans lequel le transport pneumatique est réalisé à travers un tamis.

14. Dispositif selon l'une quelconque des revendications précédentes 12 à 13, dans lequel le point de réception (31) est un conteneur de construction (17), une station de construction, une station de désemballage (13) et/ou une station de nettoyage (14).
